# FASCICULE DE BREVET EUROPEEN

(11) **EP 1 326 691 B1**
(45) Date de publication et mention de la délivrance du brevet: **23.07.2008**
(21) Numéro de dépôt: 01978560.9
(22) Date de dépôt: 17.10.2001
(51) Int. Cl.: B01D 21/00, C02F 1/52

(54) **SYSTEME POUR LE TRAITEMENT DE L'EAU INCLUANT UNE INSTALLATION DE MESURE DE LA CONCENTRATION EN MATERIAU GRANULAIRE DENSE D'UN ECOULEMENT**
SYSTEM ZUR WASSERBEHANDLUNG MIT EINER ANLAGE ZUR KONZENTRATIONSMESSUNG EINES DICHTEN KÖRNIGEN MATERIALES AUS EINER STRÖMUNG
WATER TREATMENT SYSTEM COMPRISING AN INSTALLATION FOR MEASURING CONCENTRATION IN DENSE GRANULAR MATERIAL OF A FLOW

(30) Priorité: 20.10.2000 FR 0013499
(43) Date de publication de la demande: 16.07.2003
(73) Titulaire: OTV SA, 94417 Saint-Maurice Cedex (FR)
(72) Inventeur: BINOT, Patrick, F-77600 RENTILLY PAR BUSSY SAINT-GEORGES (FR); RINEAU, Stanislas, F-35000 RENNES (FR)
(74) Mandataire: Larcher, Dominique
(86) Numéro de dépôt international: PCT/FR2001/003222
(87) Numéro de publication internationale: WO 2002/032539

(56) Documents cités:
- FR-A- 2 627 704
- FR-A- 2 719 235
- US-A- 3 666 419
- US-A- 4 279 759
- US-A- 5 730 864

## Description

L'invention concerne le domaine du traitement de l'eau et trouve notamment son application dans le cadre des procédés de traitement des eaux usées en particulier ceux mettant en oeuvre une floculation-décantation.

Ces procédés consistent à ajouter aux eaux usées un ou plusieurs réactifs permettant de coaguler au moins une grande partie des matières polluantes présentes dans les eaux et de flocs, puis à séparer les flocs ainsi formés de l'eau purifiée.

Selon un type d'installation perfectionnée, des moyens d'apport d'au moins un matériau granulaire plus dense que l'eau, tel que du sable, sont prévus de façon à lester les flocs en question et ainsi favoriser et accélérer la décantation de ceux-ci. Un tel dispositif est notamment décrit dans le brevet français FR2627704 publié le 13 décembre 1991 au nom de la Demanderesse.

Ce type d'installation dite "installation de traitement d'eau par flocs lestés" comprend d'une façon classique une zone de coagulation pourvue de moyens d'amenée d'eau, de moyens d'amenée d'au moins un réactif coagulant, de moyens d'amenée d'au moins un matériau granulaire plus dense que l'eau et de moyens d'agitation ; une zone de floculation munie de moyens d'agitation; au moins une zone de décantation pourvue d'une zone de récupération et d'évacuation de boues, de moyens d'évacuation d' eau clarifiée et pouvant intégrer des lamelles ; et des moyens de recyclage d'au moins une partie du matériau granulaire contenue dans lesdites boues vers l'amont de la zone de décantation.. Ces moyens de recyclage incluent dans la plupart des cas au moins un hydrocyclone.

Avec ce type d'installation, le contrôle de la concentration en matériau granulaire dans le fluide en cours de traitement est effectué usuellement soit par échantillonage direct dans la zone de floculation, et en mesurant la concentration en matériau granulaire, ou en divisant le débit d'eau traitée (en m³/h) par le flux de matériau granulaire (en kg/h) recyclé pour lester le floc. Ce flux est mesuré en sousverse de l'hydrocyclone de recyclage.

L'objectif principal de la présente invention est de détecter, automatiquement ou manuellement, les pertes éventuelles de matériau granulaire pouvant se produire par la surverse de l'hydrocyclone de recyclage, particulièrement dans le cas de petits hydrocyclones.

Un autre objectif est de mesurer la concentration en matériau granulaire dans le fluide en cours de traitement, de façon à détecter les changements anormaux éventuels de cette concentration.

Un autre objectif de la présente invention est de fournir des moyens autorisant un rétablissement rapide des conditions normales de concentration en matériau granulaire.

Ces objectifs sont atteints grâce à un système selon la revendication 1.

Préférentiellement, ledit matériau granulaire dense est du sable.

Selon une variante de l'invention, ledit organe de séparation dudit matériau granulaire dense inclut au moins un décanteur fonctionnant à débit donné et à une vitesse de décantation comprise entre la vitesse de décantation des boues et la vitesse de décantation du sable, notamment entre entre 2 m/h et 100 m/h, préférentiellement entre 10 m/h et 50 m/h et de façon préférée entre toutes à une vitesse de 30 m/h.

Egalement selon une autre variante de l'invention ledit organe de séparation dudit matériau granulaire dense inclut au moins un hydrocyclone fonctionnant à débit donné à la place d'un décanteur et dont la dimension de coupure est choisie pour séparer le matériau granulaire en sousverse de l'eau et des fines particules en surverse.

Selon une variante préférentielle de l'invention, le système comprend une capacité dans laquelle la sousverse dudit organe de séparation, contenant le matériau granulaire dense séparé, est stockée pendant ladite période donnée T, ladite capacité étant munie d'au moins un capteur permettant de mesurer la quantité de matériau granulaire stockée dans celle-ci et d'un moyen de vidange permettant de vider ladite capacité. Le capteur en question est avantageusement un capteur permettant de mesurer la hauteur ou le poids dudit matériau granulaire dense. Ce capteur pourra être monté réglable en hauteur. On pourra aussi utiliser un jeu de deux capteurs.

La présente invention concerne également un procédé d'utilisation d'un système tel que décrit ci-dessus qui consiste à calculer la concentration dudit matériau granulaire dans ledit écoulement en comparant, à la fin de chaque période T, la quantité de matériau granulaire séparé au débit constitué par le liquide et le matériau envoyé vers ledit organe de séparation.

Selon une variante, le procédé consiste à comparer ladite concentration en matériau granulaire à une valeur prédéterminée et, en fonction du résultat de ladite comparaison, à agir sur une alarme, ou sur les moyens d'arrêt - démarrage dudit systeme pour maintenir la concentration en matériau granulaire dense dudit écoulement dans les limites souhaitées.

Selon une autre variante, le procédé consiste à déclencher une action (alarme, arrêt ou démarrage du systeme) lorsque le poids ou la hauteur de matériau dans ladite capacité dépasse un seuil prédéterminé.

L'invention propose donc d'intégrer dans un tel système des moyens permettant de prélever automatiquement une partie de l'effluent, soit directement dans la zone de coagulation, soit dans les moyens de recyclage, pour en déduire la quantité ou la concentration de cet écoulement en matériau granulaire et corollairement obtenir une information sur la qualité de fonctionnement du système.

L'invention, ainsi que les différents avantages qu'elle présente seront plus facilement compris grâce à la description qui va suivre de deux modes de réalisation de celle-ci donnés en référence aux dessins dans lesquels :
- la figure 1 représente de façon schématique un premier mode de réalisation d'un système de traitement d'eau par flocs lestés conforme à la présente invention, dans laquelle une partie de l'effluent est prélevé au niveau de la surverse de l'hydrocyclone, permettant de mesurer la concentration en matériau granulaire, qui est normalement très faible, dans cette surverse, et de réagir en cas d'augmentation anormale de cette concentration ;
- la figure 2 représente une variante du premier mode de réalisation représenté à la figure 1 ;
- la figure 3 représente de façon schématique un second mode de réalisation d'une installation de traitement d'eau par flocs lestés conforme à la présente invention, dans laquelle une partie de l'effluent est prélevé dans la zone de floculation, permettant de mesure la concentration en matériau granulaire dans la zone de floculation ;
- la figure 4 représente une variante du second mode de réalisation représenté à la figure 3 ;

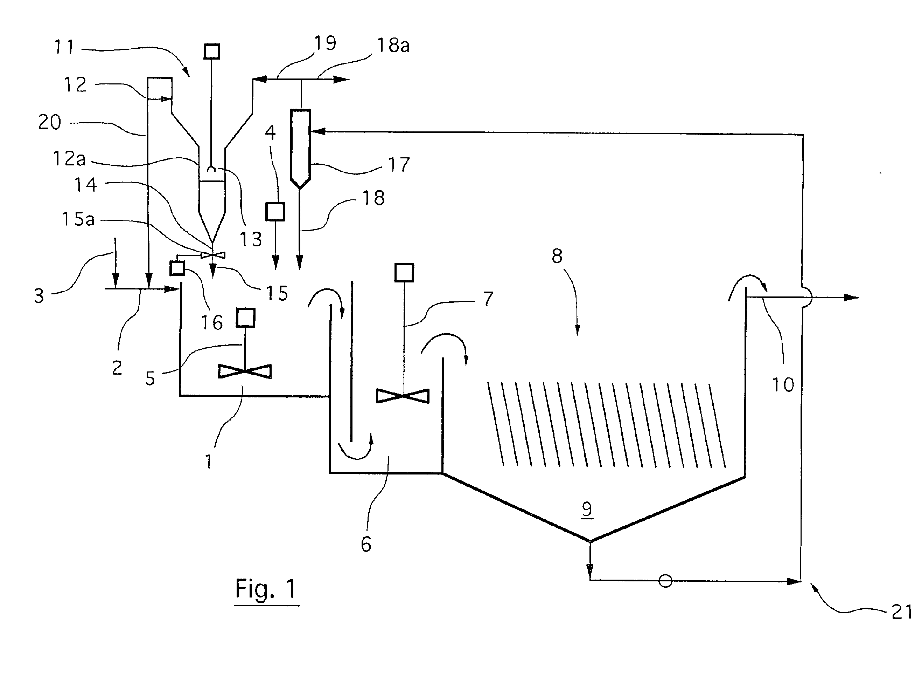

En référence à la figure 1, l'installation comprend en série une zone de coagulation 1, une zone de floculation 6 et une zone de décantation 8.

La zone de coagulation est, de façon classique, pourvue de moyens d'arrivée d'eau à épurer 2 (eux-mêmes équipés de moyens de distribution 3 d'un agent coagulant), de moyens de distribution 4 d'un matériau granulaire, en l'occurrence du sable, et de moyens d'agitation 5.

La zone de floculation est quant à elle pourvue d'un agitateur 7.

La zone de décantation 8 est pourvue de lamelles et présente dans sa partie inférieure une zone de récupération et d'évacuation 9 des boues et dans sa partie supérieure des moyens d'évacuation 10 de l'eau clarifiée.

Egalement d'une façon classique, l'installation comprend des moyens de recyclage 21 du matériau granulaire récupéré dans la zone de récupération et d'évacuation 9 de la zone de décantation 8. Une canalisation coopérant avec une pompe dirige les boues récupérées en 9 vers un hydrocyclone 17 pourvu de moyens de distribution 18 du matériau granulaire séparé (et d'un peu de boue, proportionnellement au rapport sousverse hydrocyclone / entrée hydrocyclone) vers la zone de coagulation 1 et de moyens 18a d'évacuation du reste des boues vers la filière de traitement des boues.

Conformément à la présente invention, au moins une partie de l'effluent (dans ce cas sous forme de boues ne contenant que très peu de matériau granulaire) provenant de l'hydrocyclone est prélevée de celui-ci grâce à une canalisation 19. Cette partie du débit de boues est envoyée (à débit sensiblement constant) vers un organe de séparation 11 incluant un décanteur en forme de colonne de décantation 12 et une capacité 12a préférentiellement de section plus faible pour améliorer la sensibilité de mesure de la hauteur du matériau décanté. Cette capacité 12a est pourvue dans sa partie inférieure d'une sortie 14 communiquant avec des moyens de redistribution 15 du sable décanté dans la capacité 12a dans ledit bassin 1 de floculation. Ces moyens de redistribution 15 incluent une vanne 15a reliée à des moyens de temporisation 16. Le dispositif 1 comprend également des moyens de réacheminement 20 de la surverse de la capacité 12a vers les moyens d'amenée 2 de l'effluent brut dans l'installation. La capacité 12a est par ailleurs équipée d'un capteur 13 permettant de détecter une hauteur maximale de sable dans la capacité 12a (ou un poids maximum de sable dans la capacité 12a).

Le fonctionnement de l'installation est le suivant.

Grâce aux moyens selon l'invention, une partie du débit de boues de l'hydrocyclone 17 est prélevée en continu à débit sensiblement constant. Ces boues prélevées décantent dans la capacité 12a où elles sont séparées en sable et en une surverse d'eau et de boue réacheminée en continu par les moyens 20 en tête d'installation. Grâce à la vanne 15a et aux moyens de temporisation 16, le sable décanté dans la capacité 12a est régulièrement redistribué dans la zone 1.

Lorsque le fonctionnement de l'hydrocyclone est normal, le niveau de sable dans la capacité 12a n'atteint jamais la hauteur ou le poids seuils déterminés par le capteur 13, car le sable arrivant en faible quantité est libéré périodiquement de la capacité avant d'atteindre ce seuil.

Lorsque le fonctionnement de l'hydrocyclone est anormal, le débit de boues prélévé par la canalisation 19 contient une quantité excessive de sable. Le niveau du sable dans la capacité 12a augmente jusqu'à atteindre le capteur 13 avant l'ouverture périodique de la vanne 15a et fournir une information permettant soit automatiquement, soit manuellement de rétablir le fonctionnement normal.

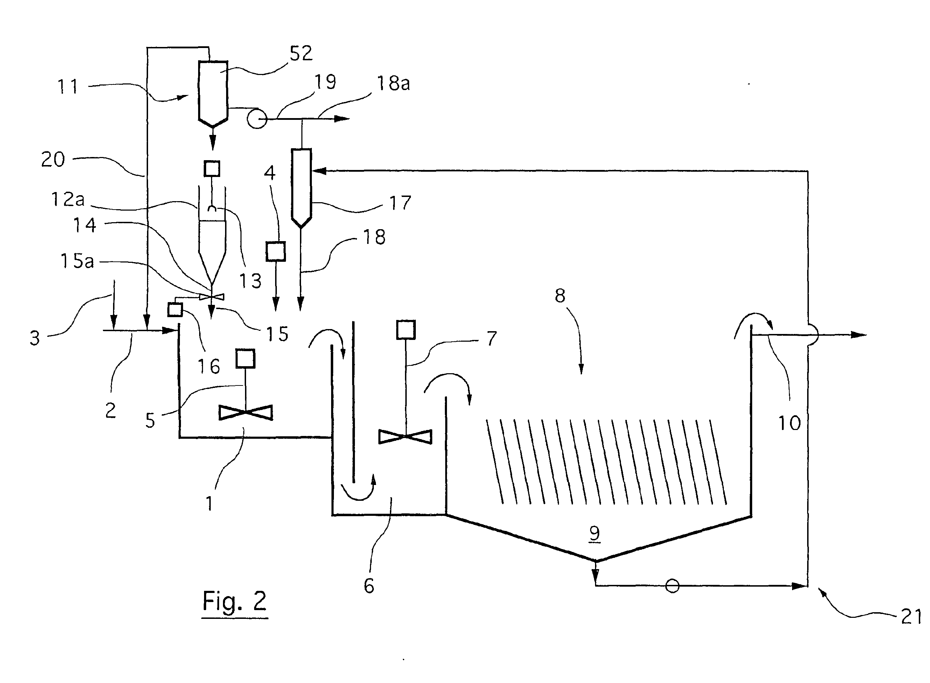

Dans la variante représentée à la figure 2, la colonne de décantation 12 a été remplacée par un hydrocyclone 52.

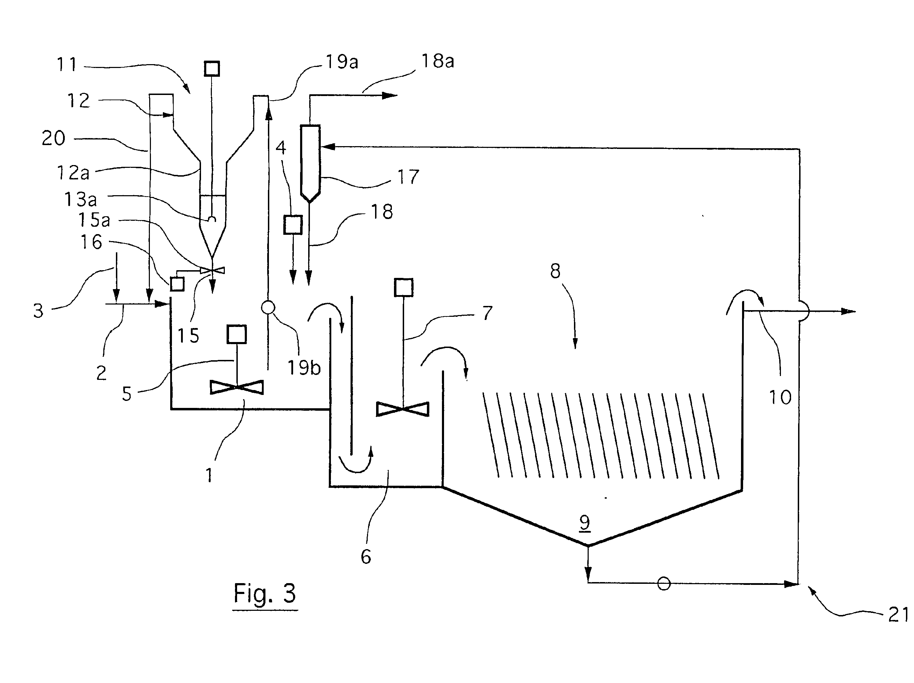

Dans le mode de réalisation représenté à la figure 3, sur laquelle les éléments communs au mode de réalisation représenté à la figure 1 et à sa variante représenté à la figure 2 portent les mêmes références, l'effluent est prélevé non pas à la sortie de l'hydrocyclone mais directement dans la zone de coagulation 1.

Conformément à la présente invention, une partie de l'effluent présent dans ce bassin (par exemple5 m³/h) est prélevée grâce à une canalisation 19a et à une pompe 19b.

Cette partie est envoyée vers un organe de séparation 11 incluant un décanteur en forme de colonne de décantation 12 présentant dans sa partie inférieure une capacité 12a. Cette capacité est pourvue dans sa partie inférieure d'une sortie 14 communiquant avec des moyens de redistribution 15 du sable décanté dans la capacité 12a dans la zone 1. Ces moyens de redistribution 15 incluent une vanne 15a reliée à des moyens de temporisation. Le dispositif 1 comprend également des moyens de réacheminement 20 de la surverse de la capacité 12a vers les moyens d'amenée 2 de l'effluent brut dans l'installation. La capacité 12a est par ailleurs équipée d'un capteur 13a permettant de détecter une hauteur minimale de sable dans la capacité.

Le fonctionnement de l'installation est le suivant.

Lorsque le fonctionnement de l'hydrocyclone est normal, c'est-à-dire lorsque la concentration en sable dans le bassin 1 est normale (par exemple 3kg/m³ d'effluent floculé), le niveau de sable dans la capacité 12a atteint toujours le capteur 13a, car le sable accumulé dans la capacité atteint le seuil de détection dans la capacité 12 a avant l'ouverture périodique de la vanne 15a.

Lorsque le fonctionnement de l'hydrocyclone est anormal, la concentration en sable de l'effluent prélévé par la canalisation 19 dans la zone de floculation 1 est anormalement faible. Le niveau du sable dans la capacité 12a diminue jusqu'à atteindre le niveau minimum, non détectable par le capteur 13a et fournir une information permettant soit automatiquement, soit manuellement de rétablir le fonctionnement normal.

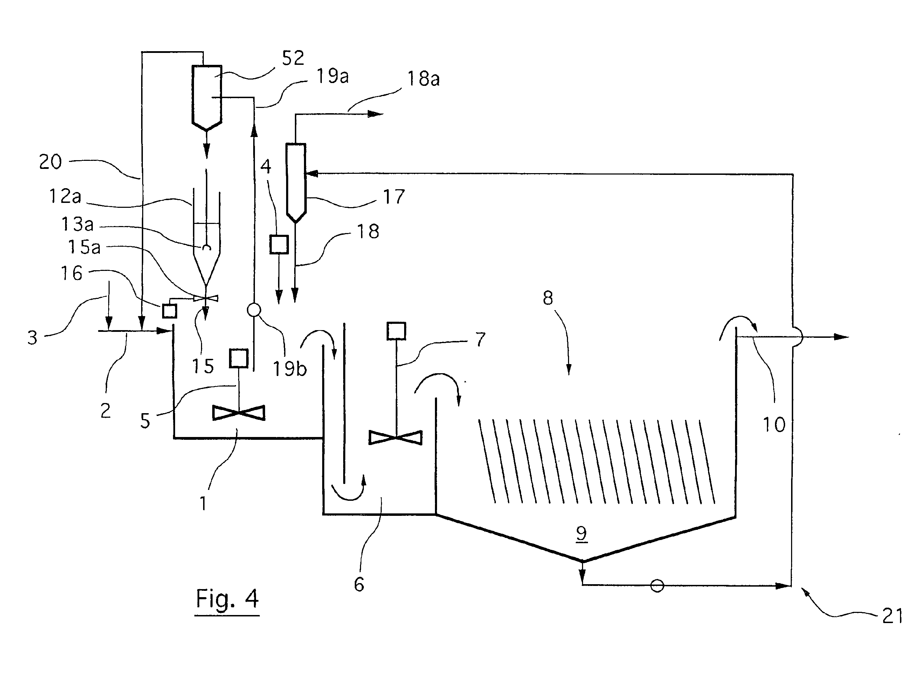

Dans la variante représentée à la figure 4, la colonne de décantation 12 a été remplacée par un hydrocyclone 52.

Les modes de réalisation de l'invention ici décrits n'ont pas pour objet de réduire la portée de celle-ci. Il pourra donc y être apporté de nombreuses modifications sans sortir de son cadre. On notera notamment que le mode de séparation gravitaire pourra être remplacé par tout autre mode de séparation adapté, tel que l'hydrocyclonage, la centrifugation, etc...

## Revendications

1. Système pour le traitement de l'eau comprenant :
au moins une chambre de coagulation (1) pourvue de moyens d'amenée d'eau (2), de moyens d'amenée d'au moins un réactif coagulant (3), de moyens d'amenée (4) d'au moins un matériau granulaire plus dense que l'eau (4) et de moyens d'agitation (5) ;
au moins une chambre de floculation (6) munie de moyens d'agitation (7);
au moins une chambre de décantation (8) pourvue d'une zone de récupération et d'évacuation de boues (9) et de moyens d'évacuation (10) d' eau clarifiée ;
des moyens de recyclage (21) d'au moins une partie du matériau granulaire contenue dans lesdites boues vers ladite chambre de floculation (1) par l'intermédiaire d'un hydrocyclone (17) permettant de recycler le matériau granulaire et d'évacuer en surverse l'excès de boues
**caractérisée en ce qu'**il inclut une installation de mesure de la concentration dudit matériau granulaire dense comportant :
des moyens de prélèvement (19,19a) d'une partie de l'effluent, soit directement dans la zone de coagulation (1), soit dans les moyens de recyclage (21),
au moins un organe de séparation (11) du matériau granulaire dense d'une part, et, du liquide et des particules fines en suspension d'autre part; au moins un dispositif de mesure (12,12a,13) d'au moins un paramètre représentatif de la quantité de matériau granulaire dense séparé pendant une période déterminée T.

2. Système selon la revendication 1 **caractérisé en ce que** ledit matériau granulaire est du sable.

3. Système selon les revendications 1 et 2, **caractérisé en ce que** ledit organe de séparation (11) du matériau granulaire dense inclut au moins un décanteur fonctionnant à débit donné et à une vitesse de décantation comprise entre la vitesse de décantation des boues et la vitesse de décantation du sable.

4. Système selon la revendication 3, **caractérisé en ce que** ledit décanteur fonctionne à une vitesse de décantation comprise entre 2 m/h et 100 m/h.

5. Système selon la revendication 4, **caractérisé en ce que** la vitesse de décantation est comprise entre 10 m/h et 50 m/h.

6. Système selon la revendication 5, **caractérisé en ce que** la vitesse de décantation est de 30 m/h.

7. Système selon la revendication 1 ou 2 **caractérisé en ce que** ledit organe de séparation (11) du matériau granulaire dense inclut au moins un hydrocyclone (52).

8. Système selon l'une quelconque des revendications 1 à 7 **caractérisé en ce qu'**il comprend une capacité (12a) dans laquelle la sousverse dudit organe de séparation (11), contenant le matériau granulaire dense séparé, est stockée pendant ladite période donnée T, ladite capacité (12a) étant munie d'un capteur (13,13a) permettant de mesurer la quantité de matériau granulaire stockée dans celle-ci et d'un moyen de vidange permettant de vider ladite capacité après surverse.

9. Système selon la revendication 8 **caractérisé en ce que** ledit capteur est un capteur permettant de mesurer la hauteur ou le poids dudit matériau granulaire dense.

10. Procédé d'utilisation d'un système selon l'une des revendications 1 à 9 **caractérisé en ce qu'**il consiste à calculer la concentration dudit matériau granulaire dans l'excès de boues en comparant, automatiquement ou non, à la fin de chaque période T, la quantité de matériau granulaire séparé, au débit constitué par le liquide et le matériau envoyé vers ledit organe de séparation.

11. Procédé d'utilisation d'un système selon la revendication 10 **caractérisé en ce qu'**il consiste à comparer ladite concentration en matériau granulaire à une valeur prédéterminée et, en fonction du résultat de ladite comparaison, à agir sur une alarme, ou sur les moyens d'arrêt
- démarrage de ladite invention, pour maintenir la concentration en matériau granulaire dense dans ledit écoulement dans les limites souhaitées.

12. Procédé d'utilisation d'un système selon la revendication 9 ou 10 **caractérisé en ce qu'**il consiste à déclencher une action d'alarme, ou d'arrêt ou de démarrage de ladite installation lorsque le poids ou la hauteur de matériau dans ladite capacité dépasse un seuil prédéterminé.

## Claims

1. Water treatment system including:
at least one coagulation chamber (1) provided with water supply means (2), means for the supply of at least one coagulant reagent (3), means for the supply (4) of at least one granular material denser than water (4) and agitation means (5);
at least one flocculation chamber (6) having agitation means (7);
at least one settler chamber (8) provided with an area for the recovery and discharge of sludge (9) and means for the discharge (10) of clarified water;
means for recycling (21) at least one part of the granular material contained in said sludge towards said flocculation chamber (1) through a hydrocyclone (17) enabling the granular material to be recycled and the excess sludge to be discharged as overflow
**characterised in that** it includes a facility for measuring the concentration of said dense granular material comprising:
means for sampling (19, 19a) some of the effluent, either directly in the coagulation area (1), or in the recycling means (21),
at least one component for separating (11) the dense granular material on the one hand, and, the liquid and fine particles in suspension on the other hand; at least one device for measuring (12, 12a, 13) at least one parameter representing the quantity of dense granular material separated over a set time period T.

2. System according to claim 1 **characterised in that** said granular material is sand.

3. System according to claims 1 and 2, **characterised in that** said component for separating (11) the dense granular material includes at least one settling tank operating at a given flow rate and at a settling velocity somewhere between the settling velocity of sludge and the settling velocity of sand.

4. System according to claim 3, **characterised in that** said settling tank operates at a settling velocity of between 2 m/h and 100 m/h.

5. System according to claim 4, **characterised in that** the settling velocity is between 10 m/h and 50 m/h.

6. System according to claim 5, **characterised in that** the settling velocity is 30 m/h.

7. System according to claim 1 or 2 **characterised in that** said component for separating (11) the dense granular material includes at least one hydrocyclone (52).

8. System according to any one of claims 1 to 7
**characterised in that** it comprises a capacity (12a) in which the underflow from said separation component (11), containing the separated dense granular material, is stored for said given time period T, said capacity (12a) having a sensor (13, 13a) allowing the quantity of granular material stored therein to be measured and having a drainage means enabling said capacity to be drained after overflow.

9. System according to claim 8 **characterised in that** said sensor is a sensor enabling the height or weight of said dense granular material to be measured.

10. Method of using a system according to one of claims 1 to 9 **characterised in that** it consists of calculating the concentration of said granular material in the sludge excess by comparing, automatically or not automatically, at the end of each time period T, the quantity of separated granular material with the flow rate constituted by the liquid and the material sent to said separation component.

11. Method of using a system according to claim 10 **characterised in that** it consists of comparing said concentration of granular material with a preset value and, depending on the result of said comparison, acting on an alarm, or on stop - start means of said invention, so as to keep the concentration of dense granular material in said flow within required limits.

12. Method of using a system according to claim 9 or 10 **characterised in that** it consists of triggering an action to give an alarm or to stop or start said facility when the weight or height of material in said capacity exceeds a preset threshold.

## Patentansprüche

1. Abwasserreinigungssystem, das folgendes umfasst:
mindestens eine Gerinnungskammer (1), die Mittel zum Einleiten des Wassers (2), Mittel zum Einleiten von mindestens einem Gerinnungsreagens (3), Mittel zum Einleiten (4) von mindestens einem körnigen Stoff (4), der dichter als das Wasser ist sowie Mittel zum Rühren (5) aufweist;
mindestens eine Ausflockungskammer (6), welche Mittel zum Bewegen (7) aufweist,
mindestens eine Dekantierkammer (8), die einen Bereich zur Wiedergewinnung und zum Ableiten der Klärschlämme (9) und Mittel zum Ableiten (10) des geklärten Abwassers aufweist;
Mittel zum Rezyklieren (21) von mindestens einem Teil des in den besagten Schlämmen enthaltenen körnigen Stoffes in die besagte Ausflockungskammer (1) mittels eines Hydrozyklons (17), der das Rezyklieren des körnigen Stoffes und das Ableiten von überschüssigen Schlämmen mittels eines Überlaufs ermöglicht,
**dadurch gekennzeichnet, dass** das System eine Vorrichtung zum Messen der Konzentration des besagten körnigen dichten Stoffes aufweist, die folgendes umfasst:
Mittel zur Probenahme (19, 19a) eines Teiles des Abwassers, entweder direkt in dem Gerinnungsbereich (1) oder in den Rezykliermitteln (21);
mindestens ein Organ (11) zum Trennen einerseits des dichten körnigen Stoffes und der Flüssigkeit und der in Suspension befindlichen feinen Teilchen andererseits; mindestens eine Messvorrichtung (12, 12a, 13) mindestens eines repräsentativen Parameters der Menge an dichtem körnigem Stoff, der während eines vorgegebenen Zeitintervalls T abgetrennt wurde.

2. System nach Anspruch 1, **dadurch gekennzeichnet, dass** es sich beim körnigen Stoff um Sand handelt.

3. System nach den Ansprüchen 1 und 2, **dadurch gekennzeichnet, dass** das besagte Organ (11) zum Trennen des dichten körnigen Stoffes mindestens eine Dekantiervorrichtung umfasst, die mit einem gegebenen Durchsatz arbeitet, mit einer Dekantiergeschwindigkeit, die zwischen der Dekantiergeschwindigkeit der Schlämme und derjenigen des Sandes liegt.

4. System nach Anspruch 3, **dadurch gekennzeichnet, dass** die besagte Dekantiervorrichtung mit einer zwischen 2 m/h und 100 m/h liegenden Geschwindigkeit arbeitet.

5. System nach Anspruch 4, **dadurch gekennzeichnet, dass** die Dekantiergeschwindigkeit zwischen 10 m/h und 50 m/h liegt.

6. System nach Anspruch 5, **dadurch gekennzeichnet, dass** die Dekantiergeschwindigkeit 30 m/h beträgt.

7. System nach Anspruch 1 oder 2, **dadurch gekennzeichnet, dass** das Organ zum Abtrennen (11) des dichten körnigen Stoffes mindestens ein Hydrozyklon (52) aufweist.

8. System nach einem der Ansprüche 1 bis 7, **dadurch gekennzeichnet, dass** es einen Vorratsraum (12a) aufweist, in dem der Unterlauf des besagten Trennorgans (11), der den abgetrennten dichten körnigen Stoff enthält, während des besagten gegebenen Zeitintervalls T gelagert wird, wobei der besagte Vorratsraum (12a) über einen Messfühler (13, 13a), der das Messen der gelagerten Menge an körnigem Stoff im besagten Behälter ermöglicht sowie über ein Mittel zum Entleeren verfügt, welches das Entleeren des besagten Vorratsbehälters nach Eintritt des Überlaufens ermöglicht.

9. System nach Anspruch 8, **dadurch gekennzeichnet, dass** der besagte Messfühler von der Art ist, die das Messen der Höhe oder des Gewichtes des dichten körnigen Stoffes ermöglicht.

10. Verfahren zum Einsetzen eines Systems nach einem der Ansprüche 1 bis 9, **dadurch gekennzeichnet, dass** es darin besteht, die Konzentration des besagten körnigen Stoffes im Schlammüberschuss zu berechnen, wobei am Ende eines jeden Zeitintervalls T die Menge des abgetrennten körnigen Stoffes mit dem von der Flüssigkeit und von dem zum besagten Abtrennungsorgan geleiteten Stoffes gebildeten Flusses verglichen wird, wobei dies automatisch oder nicht automatisch stattfinden kann.

11. Verfahren zum Einsetzen eines Systems nach Anspruch 10, **dadurch gekennzeichnet, dass** es darin besteht, die besagte Konzentration an körnigem Stoff mit einem vorgegebenen Wert zu vergleichen, wobei in Abhängigkeit des Ergebnisses dieses Vergleiches entweder eine Alarmvorrichtung oder Mittel zum Anhalten - Anfahrens der besagten Erfindung aktiviert werden, um die Konzentration des dichten körnigen Stoffes in dem besagten Ablauf innerhalb der gewünschten Grenzen zu halten.

12. Verfahren zum Einsetzen eines Systems nach einem der Ansprüche 9 oder 10, **dadurch gekennzeichnet, dass** es darin besteht, einen Alarm oder das Anhalten bzw. das Anfahren der besagten Vorrichtung auszulösen, wenn das Gewicht oder die Höhe des Stoffes in dem besagten Vorratsbehälter einen vorgegebenen Schwellenwert überschreitet.
